# EUROPEAN PATENT SPECIFICATION

(11) **EP 3 174 268 B1**
(45) Date of publication and mention of the grant of the patent: **07.10.2020**
(21) Application number: 15824942.5
(22) Date of filing: 03.07.2015
(51) Int. Cl.: H04L 29/08, H04L 29/06

(54) **METHOD AND APPARATUS FOR USING NETWORK EXHAUSTIVE RESOURCE**
VERFAHREN UND VORRICHTUNG ZUR VERWENDUNG EINER FLÄCHENDECKENDEN NETZWERKRESSOURCE
PROCÉDÉ ET APPAREIL D'UTILISATION DE RESSOURCE DRAINANT LE RÉSEAU

(30) Priority: 24.07.2014 CN 201410356190
(43) Date of publication of application: 31.05.2017
(73) Proprietor: Alibaba Group Holding Limited, Grand Cayman (KY)
(72) Inventor: WANG, Jin, Hangzhou Zhejiang 311121 (CN); DENG, Yuliang, Hangzhou Zhejiang 311121 (CN)
(74) Representative: Finnegan Europe LLP
(86) International application number: PCT/CN2015/083251
(87) International publication number: WO 2016/011884

(56) References cited:
- CN-A- 1 773 414
- CN-A- 1 975 789
- CN-A- 102 880 560
- US-A- 5 699 514
- US-A1- 2004 123 158
- US-A1- 2007 136 573
- US-A1- 2012 304 260

## Description

### TECHNICAL FIELD

The present application relates to usage of network resources, and more particularly, to methods and apparatuses for using exhaustible network resources.

### BACKGROUND

Various types of resources exist on networks. In general, some specific operations are allowed to be performed only in the presence of certain resources, thereby achieving specific objectives through these specific operations. For example, the download times of a valuable document may be regarded as a type of a resource. When the download times are within a limit, network users can download the document freely. When the download times reach the preset limit, the network users are unauthorized to download. Like natural resources, such resources on a network may be classified by analogy into renewable resources and non-renewable resources. The non-renewable resources cannot be repeatedly regenerated within a certain period (or can only be acquired again through a relatively complex procedure). This type of resources may also be referred to as exhaustible resources.

Based on the above characteristics of the exhaustible resources, malicious use of these resources may exist on the network. Once the exhaustible resources are exhausted due to malicious use, the normal use process is limited. Taking times of password errors as an example, a network service provider usually provides a number of times that a password is allowed to be entered incorrectly. The number of times is assumed to set as 3. When a user of malicious intention arbitrarily enters a password that turns out to be incorrect for three times, the resource allowed times of password errors allocated by the network service provider is exhausted. When a valid user of the network service intends to use the service, the user name and password are locked. It could affect the normal utilization of the service by the network user.

CN 1975789 A discloses a multi-functional access control, monitoring, and alarm integrated system that employs a multi-factor authentication processes, such as by combining password authentication and facial recognition. US 2012/0304260 A1 discloses a user authentication server using location tracking to determine whether to present an enhanced identity challenge to a user. US 2017/0136573 A1 discloses an authentication system and a method that use two or more forms of multi-factor authentication, such as a password in combination with a second authentication method that does rely on using the password. CN 102880560A discloses attempting to authenticate a user seeking access to a mobile device through facial recognition, switching to password authentication after a predefined number of successive failed attempts, and self-destroying data of the mobile device after a predefined number of successive incorrect password inputs. US 2004/123158 A1 discloses that if a user is already logged in from a trusted device, if another login attempt is received from an untrusted device, the user is asked to retype his password in an instant messaging service of the trusted device, to confirm the login attempt from the untrusted device. If the user confirms that the untrusted device login attempt is legitimate, then access is permitted from the untrusted device. Otherwise, access is denied, as the login attempt from the untrusted device is considered malicious.

### SUMMARY

In accordance with aspects of the invention there are provided a method and an apparatus for using an exhaustible network resource as set out in claims 1 and 8 respectively. Further embodiments are set out in the dependent claims.

To solve the above technical problem, embodiments of the present application provide a method for using exhaustible network resources and a corresponding apparatus thereof. It may reduce or avoid the impact on normal service operation caused by malicious consumption of the exhaustible network resources.

In one aspect, the present disclosure is directed to a method for using exhaustible network resources. The method may include determining a type of the current service operation environment, the type including a trustable environment and an untrustable environment. The current service operation may be able to influence the resource value of the exhaustible network resource. When the type of the current service operation environment is an untrustable environment, the method may also include limiting the resource value of the exhaustible network resource of the current service operation within a first-grade resource value. When the type of the current service operation environment is a trustable environment, the method may further include limiting the resource value of the exhaustible network resource of the current service operation within a second-grade resource value, the second-grade resource value being larger than the first-grade resource value.

The trustable environment may include: a determined operation environment corresponding to an operation of an exhaustible network resource performed by a proper operator; a corresponding operation environment during recovery of the second-grade resource value; or a determined operation environment corresponding to a normal operation.

The operations of determining the type of the current service operation environment may include establishing a pool of trustable environments containing information of trustable environments. When the information of the current service operation environment matches with the information of trustable environments in the pool of trustable environments, the operations of determining the type of the current service operation environment may include determining the current service operation environment as a trustable environment. When the information of the current service operation environment does not match with the information of trustable environments in the pool of trustable environments, the operations of determining the type of the current service operation environment may also include determining the current service operation environment is an untrustable environment.

The operations of establishing the pool of trustable environments containing information of trustable environments may include recording information of service operation environments, and writing the information of service operation environments into the pool of trustable environments. When the pool of trustable environments contains information of a determined service operation environment corresponding to an operation of an exhaustible network resource performed by an improper operator, or information of a determined service operation environment corresponding to a theft operation, the operations of establishing the pool of trustable environments may include removing the information of the service operation environment from the pool of trustable environments.

In some embodiments, the operations of establishing the pool of trustable environments containing information of trustable environments may include determining elements of the information of trustable environments concerned by the pool of trustable environments. The operations of establishing the pool of trustable environments may also include determining the weight of each element in accordance with the significance of the element of the information of trustable environments to the determination of a trustable environment. The operations of establishing the pool of trustable environments may further include calculating a weighted value of the recorded information of the operation environment in accordance with the elements. When the weighted value is larger than a pre-set value, the operations of establishing the pool of trustable environments may include writing the information of the operation environment into the pool of trustable environments.

The operations of limiting the resource value of the exhaustible network resource of the current service operation within the first-grade resource value may include updating the resource value of the exhaustible network resource when an operation of the current service operation fails. When the updated resource value of the exhaustible network resource reaches the first-grade resource value, the operations of limiting the resource value of the exhaustible network resource of the current service operation within the first-grade resource value may include limiting any further operation of the current service operation.

After the updated resource value of the exhaustible network resource reaches the first-grade resource value, the method may include limiting the operation of the next service operation when the operation environment of the next service operation is an untrustable environment. The method may also include limiting the maximum failure times of the operation of the next service operation as the difference between the second-grade resource value and the first-grade resource value of the resource value of the exhaustible network resource when the operation environment of the next service operation is a trustable environment.

The operations of limiting the resource value of the exhaustible network resource of the current service operation within the second-grade resource value may include updating the resource value of the exhaustible network resource when an operation of the current service operation fails. When the updated resource value of the exhaustible network resource reaches the second-grade resource value, the operations of limiting the resource value of the exhaustible network resource of the current service operation within the second-grade resource value may include limiting any further operation of the current service operation.

In another aspect, the present disclosure is directed to an apparatus for using an exhaustible network resource. The apparatus may include a type determining unit determining a type of the current service operation environment. The type may include a trustable environment and an untrustable environment. The current service operation may be able to influence the resource value of the exhaustible network resource. The apparatus may also include a first limiting unit limiting the resource value of the exhaustible network resource of the current service operation within a first-grade resource value when the type of the current service operation environment is an untrustable environment. The apparatus may further include a second limiting unit limiting the resource value of the exhaustible network resource of the current service operation within a second-grade resource value when the type of the current service operation environment is a trustable environment, the second-grade resource value being larger than the first-grade resource value.

In addition, the apparatus may include a pool of trustable environments storing information of trustable environments. The type determining unit may include a determining sub-unit that determines the current service operation environment as a trustable environment when the information of the current service operation environment matches with the information of trustable environments in the pool of trustable environments. The determining sub-unit may also determine the current service operation environment is an untrustable environment when the information of the current service operation environment does not match with the information of trustable environments in the pool of trustable environments.

Furthermore, the first limiting unit may include an updating sub-unit updating the resource value of the exhaustible network resource when an operation of the current service operation fails. The limiting sub-unit may limit any further operation of the current service operation when the updated resource value of the exhaustible network resource reaches the first-grade resource.

In the embodiments of the present application, a service operation environment is classified into a trustable environment and an untrustable environment. A resource value of an exhaustible network resource corresponding to the current service operation is limited by different grades according to different types of the operation environments. Accordingly, it may reduce or avoid the impact on normal service operation caused by malicious consumption of the exhaustible network resources.

### BRIEF DESCRIPTION OF THE DRAWINGS

To illustrate the technical solutions according to the embodiments of the present application clearly, the accompanying drawings required for describing the embodiments are introduced briefly in the following. Apparently, the accompanying drawings in the following are only some embodiments of the present application. Persons of ordinary skill in the art can derive other drawings from the accompanying drawings without creative efforts.
Fig. 1 is an illustrative flow chart of an exemplary method for using exhaustible network resources, according to an embodiment of the present application.
Fig. 2 is an illustrative flow chart of an exemplary method for establishing a pool of trustable environments, according to an embodiment of the present application.
Fig. 3 is an illustrative flow chart of another exemplary method for establishing a pool of trustable environments, according to an embodiment of the present application.
Fig. 4 is an illustrative flow chart of an exemplary method for using exhaustible network resources, according to an embodiment of the present application.
Fig. 5 is an illustrative structural block diagram of an exemplary apparatus for using exhaustible network resources, according to an embodiment of the present application.

### DETAILED DESCRIPTION

To make persons skilled in the art better understand the technical solutions of the present application, the technical solutions in the embodiments of the present application are described clearly and completely with reference to the accompanying drawings in the embodiments of the present application. The described embodiments are merely some rather than all of the embodiments of the present application. Based on the embodiments of the present application, all other embodiments derived by persons of ordinary skill in the art without any creative efforts shall fall within the protection scope of the present application.

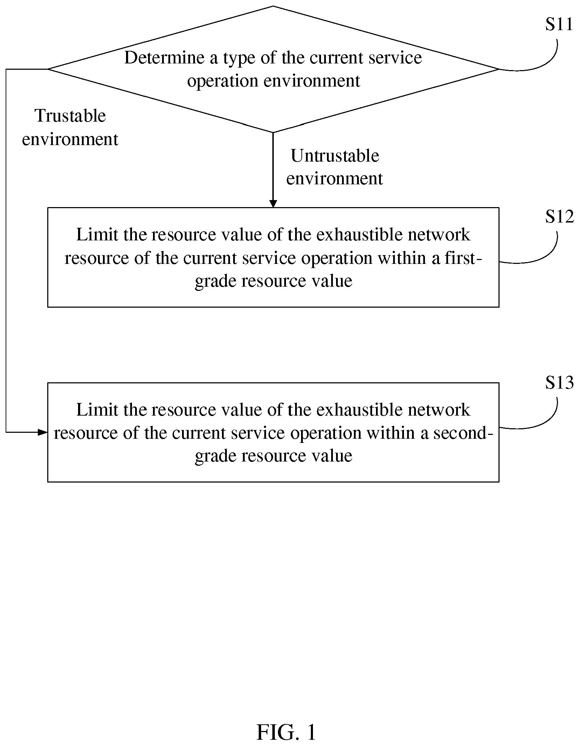

Fig. 1 is an illustrative flow chart of an exemplary method for using exhaustible network resources, according to an embodiment of the present application. The method may include:
Step S11: Determine a type of the current service operation environment. The type may include a trustable environment and an untrustable environment. The current service operation may be able to influence the resource value of the exhaustible network resource. When the type of the current service operation environment is an untrustable environment, the method may also include performing Step S12. When the type of the current service operation environment is a trustable environment, the method may include performing Step S13.

A network user usually needs to perform a service operation according to related requirements in order to access service functions provided by a network service provider. For example, a network user needs to perform a login operation in order to log in to a system, perform an operation of identity authentication in order to use a specific service provided by a network service provider, or perform a download operation in order to acquire some data from the network side. These service operations have one common characteristic that network resources exist correspondingly to these operations. The operation process of each service operation may influence the resource value of the corresponding network resource. This type of resources is usually exhaustible during a service operation. In other words, once the resources exhausted during a service operation process, these resources not allowed to be used in other related operations. These resources are referred to as exhaustible network resources.

Taking the login to an email system as an example, the operations of entering a user name, entering a password, and pressing a login button belong to service operations for completing a login service. A network resource of incorrect password attempts exists in the service operation. In other words, the maximum number of attempts that an incorrect password is allowed to be entered is a set value of the incorrect password attempts. The resource is pre-allocated by the email system. The service operation process of a network user may influence the resource value of the resource. Every time a password is entered incorrectly, the pre-allocated incorrect password attempts are reduced by one. Once a password is entered correctly, the previous incorrect attempts are eliminated and the number of times is reset. If the incorrect password attempts reach the pre-allocated incorrect password attempts in a service operation, the pre-allocated resource is exhausted. The account is temporarily or permanently locked. Accordingly, the subsequent operations cannot be performed in this service operation.

A service operation has a corresponding service operation environment. The service operation environment may have two properties according to actual situations, including a trustable environment and an untrustable environment. The trustable environment may include: a determined operation environment corresponding to an operation of an exhaustible network resource performed by a proper operator; a corresponding operation environment during recovery of the second-grade resource value; or a determined operation environment corresponding to a normal operation. A service operation environment opposite to the above situations or similar situations may be regarded as an untrustable environment. A service operation performed in a trustable environment is usually considered to be secure. The problem of malicious use of the exhaustible network resources may not occur. It is very likely that an operator in an untrustable environment is determined as an improper user of the service operation (a proper user includes a valid user and an authorized user of the service operation). In this case, the problem of the malicious use of the exhaustible network resources may occur. After the exhaustible network resources are maliciously exhausted, the proper user of the service operation has to retrieve the exhaustible resources through a complex procedure. He might need to request an allocator of the exhaustible resource for reallocation. It may even be impossible to retrieve the resources. This may affect the utilization of the service by the network user. For example, the incorrect password attempts are used as exhaustible network resources. When a user with malicious intention to use up the incorrect password attempts allocated by the system, the account number is locked. A valid user of the email account has to unlock the account through a manual or self-service provided by the email service system and acquire renewed incorrect password attempts in a next service operation.

Because the service operation environment is classified into a trustable environment and an untrustable environment, the determination of the type of the current service operation environment may lead to two results: one is that the current service operation environment is an untrustable environment, and the other is that the current service operation environment is a trustable environment. In the former condition, Step S12 may be performed. In the latter condition, Step S13 may be performed. The two steps provide different usages of the resource value of the exhaustible network resources corresponding to the current service operation.

Step S12: Limit the resource value of the exhaustible network resource of the current service operation within a first-grade resource value.

Step S13: Limit the resource value of the exhaustible network resource of the current service operation within a second-grade resource value. The second-grade resource value may be larger than the first-grade resource value.

To illustrate the technical solution in the embodiment of the present application clearly and explicitly, several concepts are briefly described below. One is service operation and specific operation. The service operation corresponds to a certain service function and is a general concept relating to the specific operation. For example, the login to an email system may be considered as a service operation, through which the purpose of entering an email system is achieved. The service operation, however, is not a specific motion and is generally constituted by a series of specific operations, such as entering a user name, entering a password, and clicking a login button. Moreover, as for a download service operation, similarly, the download service operation serves as a general service operation and includes specific operations, such as selecting a download object, clicking a download button, selecting a storage destination, and confirming download. It also needs to be noted that, the service in a service operation has a wide range, not limited to a specific type. It may be a login service, an identity authentication service, a download service or a transmission service. In other words, any service capable of achieving a certain function and provided by a network service provider to a user may be considered as a service operation. Another concept is exhaustible network resources. In this application, the property of a network resource is defined as exhaustible, but different from a common natural resource which is absolutely not renewable once exhausted. Based on the repeatability (inexhaustibility) characteristic of electronic information, an exhausted network resource may actually be acquired again through a specific routine (procedure). Therefore, the concept of exhaustible resource highlighted in the present application stands for relative meaning. That is, as for a service operation, once the exhaustible resource is used up in the service operation process, the proceeding of some operations is limited. Taking the login to an email system as an example, when the incorrect password attempts pre-allocated by the system are used up in a service operation process, the email login operation cannot be performed any more. It is needed to unlock the account and acquire renewed times of incorrect password attempts for login to the email again. In this way, the incorrect password attempts as resources are exhaustible in this service operation and are exhaustible network resources.

According to the above introduction of the process of the method for using exhaustible network resources in the present application and the description of the related terms, persons of ordinary skill in the art may find that the above embodiment has the following technical effects.

Firstly, in the above embodiment, a current service operation environment may be classified into a trustable environment and an untrustable environment. Such classification of the environment types conforms to the realistic situation. Operations performed in a trustable environment may be trustable. The consumption of exhaustible network resources in a trustable environment is considered to be normal instead of malicious. For example, when a valid user of an account intends to log in to an email system, an incorrect password attempt is considered as being caused by misoperation or vague memory of the user. Operations performed in an untrustable environment are untrustable. The consumption of exhaustible network resources in this condition may be caused by the facts that an improper user performs a login using the account intentionally enters a wrong password to attack the account, or even performs a password decryption operation by using a password dictionary. In this case, the consumption of the exhaustible network resources may bring trouble to the valid user. In the above embodiment, through the determination of the property type of the current service operation environment, a corresponding measure may be adopted to exclude abnormal consumption of the exhaustible network resources in the present application. However, in prior art, it is unaware that a close relationship may exist between an operation environment and exhaustible network resources. Therefore, these two properties of the current service operation environment are not identified and distinguished. Any behavior resulting in the consumption of a network resource is considered to be done by a valid user. It could lead to a serious result because the exhaustible network resources belonging to a valid user are maliciously consumed. To retrieve the resources (request the system for reallocation), the valid user has to go through a complex procedure of providing related materials for identity authentication, answering some authentication problems, analyzing the degree of correlation with other users and the like before acquiring a resource reallocated by the system. For example, an unlocking process of a currently locked QQ number may require a user to go through these steps. It may waste a lot of time and energy of the user and largely degrade the user experience. It may also consume the CPU resource of the system, increase the cost and reduce the efficiency of the system because of the establishment of a resource reallocation mechanism, response to a reallocation request from the valid user, and reallocation of the exhaustible network resources.

In addition, in the above embodiment, the resource value of the exhaustible network resources is classified into a first-grade resource value and a second-grade resource value. Different grades correspond to different resource values and cause different limitation degrees on service operations. Because the resource values of exhaustible network resources are classified by grades, whether the property of the current service operation environment is a trustable environment or an untrustable environment becomes a critical factor for deciding utilization of exhaustible network resources. In an untrustable environment, the consumption of the exhaustible resources is limited even if malicious consumption of the exhaustible network resources occurs. The exhaustible resources may be consumed to the first-grade resource value at the most. The exhaustible resources would not be truly exhausted. A valid user at least has a chance to use the exhaustible resource. At least the valid user may be able to attempt the number of times equal to the difference between the second-grade resource value and the first-grade resource value. Therefore, the malicious consumption behavior of an invalid user may have no substantial impact on the service operation of the valid user. The following two circumstances exist in a trustable environment.

By way of comparison, one case is that the second-grade resource value is equal to the resource value found in other systems that do not have the embodiments described in this application. For example, the incorrect password attempts could be set to three in both the above embodiment of the present disclosure and in these other systems. Thus, a valid user that is in a trustable environment may normally use the exhaustible network resources unconsciously (having three chances of entering a password incorrectly). That is, for the valid user, the above embodiment achieves smooth transition to the solution from these other systems. No influence is caused by the fact that in addition to the second-grade resource value equal to the resource value in these other systems, the present application sets the first-grade resource value. In this case, because the first-grade resource value is less than the second-grade resource value, an invalid user that is in an untrustable environment no longer has three chances of malicious consumption as in these other systems, but has less than three chances. It may avoid to a certain extent the impact caused by malicious consumption of the network resource.

Another case is that the second-grade resource value is greater than the resource value in other systems that do not have the embodiments described in this application. For example, it is assumed that the first-grade resource value is three, which is equal to the resource value in these other systems, while the second-grade resource value is five. In this scenario, a valid user has two more chances of entering a password incorrectly, in addition to the normal number of chances for the exhaustible network resources in these other systems (that is, having three chances of entering a password incorrectly). It may improve the user experience.

Although the above embodiment (referred to as a basic embodiment hereinafter) can achieve good technical effects as compared with the prior art, the technical solution in the above embodiment is not unmodifiable. Persons skilled in the art can make various simple or complex variations or improvements to the above embodiment upon actual requirements. It is possible to obtain more embodiments of the present application and achieve better technical effects.

For example, in another embodiment, Steps S12 and S13 in the basic embodiment may not both appear in one embodiment. That is, only Steps S11 and S12 are performed, or only Steps S11 and S13 are performed. The modified embodiment has obviously wider application scenarios than the above embodiment. In the former situation (a technical solution including Steps S11 and S12), the method focuses on the operations when the current operation environment is an untrustable environment. Only such an environment may have negative effects on exhaustible network resources. For an operation in a trustable environment, a valid user from a trustable environment may use exhaustible network resources in the same manner as in other systems that do not have the embodiments described in this application. Accordingly, the complexity and implementing difficulty of the whole technical solution are largely reduced, and the occupation of the system resource is also largely reduced. On the other hand, in the latter situation (a technical solution including Steps S11 and S13), the method focuses on the operations when the current operation environment is a trustable environment. Only the consumption of exhaustible network resources by the operations in the trustable environment is effective. Malicious consumption by the operations in an untrustable environment is excluded from the range of the second-grade resource value. Therefore, no matter whether the second-grade resource value is identical to or different from the resource value in the prior art, this solution is superior to the approach of the prior art in which the consumption of a network resource is considered to be done by a valid user no matter in a trustable environment or an untrustable environment.

In another embodiment of the present application, an exemplary method described below may be adopted to perform Step S11 in the basic embodiment (determining the type of the current operation environment): establishing a pool of trustable environments including information of trustable environment. When determining the type of the current operation environment, the method may include matching the acquired information of the current operation environment with the information of trustable environment stored in the pool of trustable environments. When there is a match, the method may include determining that the current operation environment is a trustable environment. Otherwise, the method may include determining that the current operation environment is an untrustable environment. The matching may be in a completely equal or containing mode. For example, the information of a trustable operation environment in the pool of trustable environments may include: using an N operating system, an address of a network device being 0FFE, and an IP address being 168.192.03.4. When the information of the current operation environment also includes: using an N operating system, an address of a network device being 0FFE, and an IP address being 168.192.03.4, the current operation environment is determined to be a trustable environment in a completely equal mode. When the information of the current operation environment includes: using an N operating system, and an IP address being 168.192.03.4. There is no complete matching. Whether the current operation environment is determined to be a trustable environment or an untrustable environment may depend on a preset matching threshold. When a preset matching degree only requires that any two elements are identical, the current operation environment may be determined as a trustable environment. This kind of matching is a containing mode.

In some embodiments, the approach to establishing a pool of trustable environments may be further illustrated by two exemplary methods provided below.

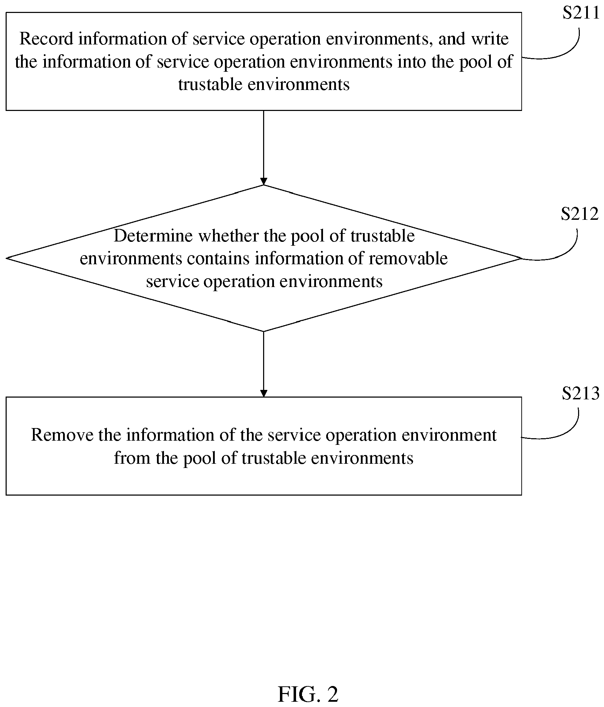

Fig. 2 is an illustrative flow chart of an exemplary method for establishing a pool of trustable environments, according to an embodiment of the present application.

S211: Record information of service operation environments, and write the information of service operation environments into the pool of trustable environments.

The recorded information of operation environments may include information of all the operation environments including some operation environments that may actually be untrustable. Thus, this step is mainly for initialization of the pool of trustable environments. In some embodiments, when an operation environment is certainly determined to be a trustable environment in this step, the operation environment may be recorded in the pool of trustable environments and specifically marked. All specifically marked operation environments may not need to go through the subsequent screening process.

S212: Determine whether the pool of trustable environments contains the following information of service operation environments: information of a determined service operation environment corresponding to an operation of an exhaustible network resource performed by an improper operator, or information of a determined service operation environment corresponding to a theft operation. When the pool of trustable environments contains one of the two kinds of information, the method may include performing Step S213.

The operation environments in the pool of trustable environments are screened in this step. The screening rules may be diversified. An operation environment in the pool of trustable environments satisfying a preset screening rule shall be retained in the pool of trustable environments. Otherwise, the operation environment is removed from the pool of trustable environments through Step S213. In some embodiments, the screening rule may include: the information of the determined service operation environment corresponding to an operation of an exhaustible network resource performed by an improper operation. This screening rule may determine whether an operation environment is trustable or untrustable in accordance with the identity of an operator of the operation environment. When the operator is an improper operator (for example, an invalid operator or unauthorized operator) of the exhaustible network resources, the operation environment is determined to be an untrustable operation environment. Otherwise, the operation environment is determined to be a trustable operation environment. The screening rule may further include: the information of the determined service operation environment corresponding to a theft operation. This screening rule may determine whether the operation environment is trustable or untrustable from the aspect of the operation. For example, if a user provides related information in the correspondence to successfully change or retrieve the password, the operation environment in which the password was correctly entered last time is a theft operation environment. It may be determined to be an untrustable operation environment.

S213: Remove the information of the service operation environment from the pool of trustable environments.

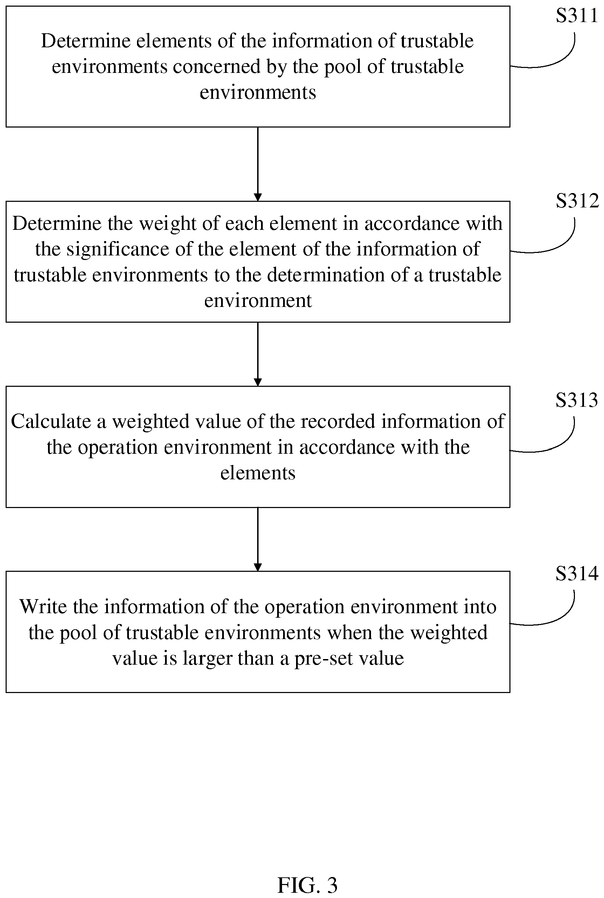

Fig. 3 is an illustrative flow chart of another exemplary method for establishing a pool of trustable environments, according to an embodiment of the present application.

Step S311: Determine elements of the information of trustable environments concerned by the pool of trustable environments.

Step S312: Determine the weight of each element in accordance with the significance of the element of the information of trustable environments to the determination of a trustable environment.

Step S313: Calculate a weighted value of the recorded information of the operation environment in accordance with the elements.

Step S314: Write the information of the operation environment into the pool of trustable environments when the weighted value is larger than a pre-set value.

In another embodiment of the present application, Steps S12 and S13 in the basic embodiment have their own specific implementation manners. For example, the step of limiting the resource value of the exhaustible network resource of the current service operation within the first-grade resource value may include: updating the resource value of the exhaustible network resource when an operation of the current service operation fails. When the updated resource value of the exhaustible network resource reaches the first-grade resource value, the step may include limiting any further operation of the current service operation. Likewise, the step of limiting the resource value of the exhaustible network resource of the current service operation within the second-grade resource value may include: updating the resource value of the exhaustible network resource when an operation of the current service operation fails. When the updated resource value of the exhaustible network resource reaches the second-grade resource value, the step may include limiting any further operation of the current service operation. In the above situation, when locking has been caused due to untrustable environments, the following situation may occur. A service operation may be performed again, and the approach to limiting the service operation may differ in accordance with the property type of the next service operation environment. When the operation environment of the next service operation is an untrustable environment, it indicates that the network resource is likely to be maliciously consumed because the locking of the exhaustible network resources is caused by the previous operation in an untrustable environment. Therefore, the next operation of the current service operation must be limited to stop the behavior of an operator of malicious intention. When the operation environment of the next service operation is a trustable environment, the service operation is performed by a valid user. If the utilization of the exhaustible network resources by the valid user is limited, it is unfair to the valid user. The plot of the invalid user succeeds. Therefore, the maximum failure times of the specific operation of the service operation should be increased. The valid user at least has chances. The number of chances may equal to the difference between the second-grade resource value and the first-grade resource value of the exhaustible network resources.

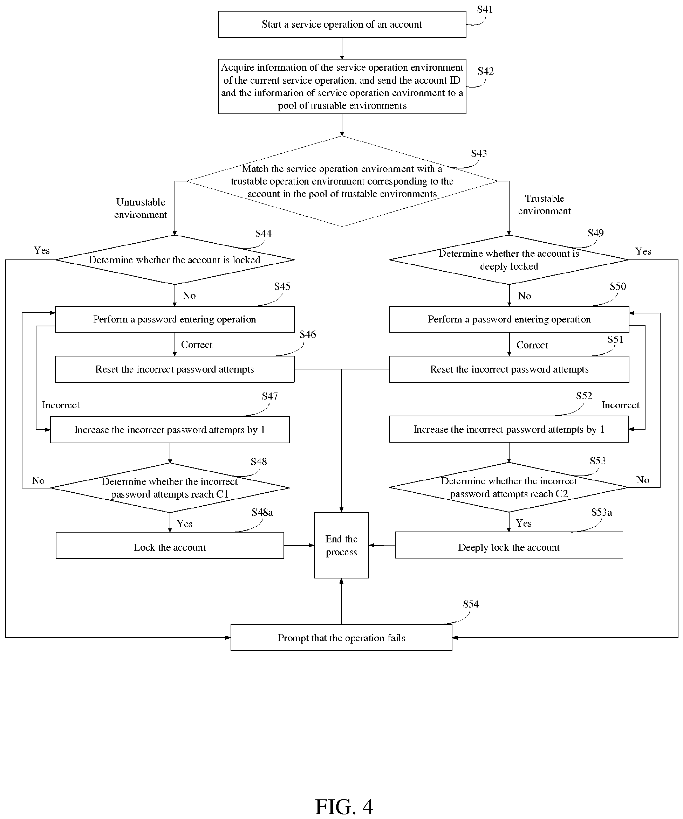

Variations or improvements are made to the basic embodiment in various aspects to obtain a series of new embodiments. To further illustrate the technical solution of the present application, a specific example is given below for description. In this example, it is assumed that the service operation is login to an account. The exhaustible network resources are incorrect password attempts. The first-grade resource value is C1, and the second-grade resource value is C2. Fig. 4 illustrates the flow chart of an exemplary method for using exhaustible network resources, according to an embodiment of the present application.

Step S41: Start a service operation of an account.

Step S42: Acquire information of the service operation environment of the current service operation, and send the account ID and the information of service operation environment to a pool of trustable environments.

Step S43: Match the service operation environment with a trustable operation environment corresponding to the account in the pool of trustable environments. If there is no match, perform Step S44. If there is a match, perform Step S49.

Step S44: Determine whether the account is locked. If yes, perform Step S54. If not, perform Step S45.

Step S45: Perform a password entering operation. If the password is entered correctly, perform Step S46. If the password is entered incorrectly, perform Step S47.

Step S46: Reset the incorrect password attempts, and end the process.

Step S47: Increase the incorrect password attempts by 1, and perform Step S48.

Step S48: Determine whether the incorrect password attempts reach C1. If yes, perform S48a to lock the account and end the process. If not, return to Step S45.

Step S49: Determine whether the account is deeply locked. If yes, perform Step S54. If not, perform Step S50.

Step S50: Perform a password entering operation. If the password is entered correctly, perform Step S51. If the password is entered incorrectly, perform Step S52.

Step S51: Reset the incorrect password attempts, and end the process.

Step S52: Increase the incorrect password attempts by 1, and perform Step S53.

Step S53: Determine whether the incorrect password attempts reach C2. If yes, perform Step S53a to deeply lock the account number and end the process. If not, return to Step S50.

Step S54: Prompt that the operation fails, and end the process.

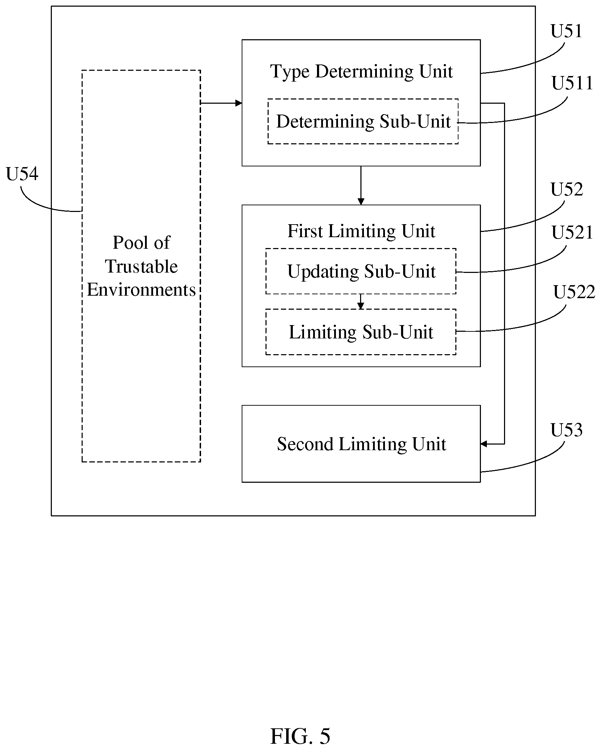

The embodiment of the method for using exhaustible network resources according to the present application is described above in detail. In another aspect, the present application further discloses an exemplary embodiment of an apparatus for using exhaustible network resources. Fig. 5 illustrates a structural block diagram of an exemplary apparatus for using exhaustible network resources, according to an embodiment of the present application. The apparatus may include a type determining unit U51, a first limiting unit U52, and a second limiting unit U53.

Type determining unit U51 is configured to determine the type of the current service operation environment. The type may include a trustable environment and an untrustable environment. The current service operation may be able to influence the resource value of the exhaustible network resource.

First limiting unit U52 is configured to limit the resource value of the exhaustible network resource of the current service operation within a first-grade resource value when the type of the current service operation environment is an untrustable environment.

Second limiting unit U53 is configured to limit the resource value of the exhaustible network resource of the current service operation within a second-grade resource value when the type of the current service operation environment is a trustable environment. The second-grade resource value may be larger than the first-grade resource value.

The working process of the apparatus embodiment is as follows: type determining unit U51 determines the type of the current service operation environment. When the current operation environment is an untrustable environment, first limiting unit U52 is triggered to limit the resource value of the exhaustible network resources of the current service operation within the first-grade resource value. When the type of the current service operation environment is a trustable environment, second limiting unit U53 is triggered to limit the resource value of the exhaustible network resources of the current service operation within the second-grade resource value.

The apparatus embodiment can achieve the same technical effects as the method embodiments. In brief, the apparatus embodiment can reduce or avoid the impact on the normal service operation of a valid user resulting from the use of exhaustible network resources by a user of malicious intention. The detailed steps and operations may refer to that of the above method embodiments.

On the basis of the apparatus embodiment, persons skilled in the art can make various modifications. For example, first limiting unit U52 and second limiting unit U53 in the apparatus embodiment may be both provided, or either of them is provided. The apparatus embodiment may further include a pool of trustable environments U54 for storing information of trustable environment. Type determining unit U51 may include a determining sub-unit U511 for determining the current service operation environment as a trustable environment when the information of the current service operation environment matches with the information of trustable environments in the pool of trustable environments. When the information of the current service operation environment does not match with the information of trustable environments in the pool of trustable environments, determining sub-unit U511 determines the current service operation environment as an untrustable environment. First limiting unit U52 may include an updating sub-unit U521 and a limiting sub-unit U522. Updating sub-unit U521 may be configured to update the resource value of the exhaustible network resource when an operation of the current service operation fails. Limiting sub-unit U522 may be configured to limit any further operation of the current service operation when the updated resource value of the exhaustible network resource reaches the first-grade resource.

It should be noted that, the above embodiments of the specification and various alternative implementations of the embodiments focus on the differences from the other embodiments or alternative implementations. Reference may be made to each other for the identical or similar parts in various circumstances. Especially, being substantially similar to the method embodiment, some variations of the apparatus embodiment are described simply. Reference may be made to the corresponding descriptions in the method embodiments for the related parts. The units in the apparatus embodiments described above may be or may not be physically separated, and may be arranged in one place or distributed to multiple network environments. In the actual application, some or all of the units may be selected to achieve the objective of the solution of the embodiment according to actual demands. Persons of ordinary skill in the art can understand and implement the present disclosure without creative efforts.

The above descriptions are merely specific implementations of the present application. It should be noted that persons of ordinary skill in the art may make various modifications and variations without departing from the principle of the present application. All such modifications and variations shall fall within the protection scope of the present application.

## Claims

1. A method for limiting access to a network based account, the method comprising:
determining (S11) a type of a current service operation environment, in which a login service operation is being performed, wherein the type of the current service operation environment is a trustable environment or an untrustable environment,
if the type of the current service operation environment is an untrustable environment:
limiting (S12) a resource value of an exhaustible network resource of the login service operation within a first-grade resource value,
updating the resource value in response to a login failure and
when the updated resource value of the exhaustible network resource reaches the first-grade resource value, limiting any further login service operations from within the untrustable environment
otherwise:
limiting (S13) the resource value of the exhaustible network resource of the login service operation within a second-grade resource value, the second-grade resource value being larger than the first-grade resource value;
updating the resource value in response to a login failure; and
when the exhaustible network resource has been used up as indicated by the updated resource value reaching the second grade resource value and the current service operation environment is trustable, limiting any further login service operations,
wherein the exhaustible network resource is incorrect password attempts and
wherein the login service operation is a login service capable of achieving access to an account provided by a network service provider.

2. The method of claim 1, wherein determining the type of the current service operation environment includes:
establishing a pool of trustable environments containing information of trustable environments; and
when the information of the current service operation environment matches with the information of trustable environments in the pool of trustable environments, determining the current service operation environment as a trustable environment; or
when the information of the current service operation environment does not match with the information of trustable environments in the pool of trustable environments, determining the current service operation environment is an untrustable environment.

3. The method of claim 2, wherein establishing the pool of trustable environments containing information of trustable environments includes:
recording (S211) information of service operation environments, and writing the information of service operation environments into the pool of trustable environments; and
when the pool of trustable environments contains information of a determined service operation environment corresponding to an operation of an exhaustible network resource performed by an improper operator, or information of a determined service operation environment corresponding to a theft operation, removing (S213) the information of the service operation environment from the pool of trustable environments.

4. The method of claim 2, wherein establishing the pool of trustable environments containing information of trustable environments includes:
determining (S311) elements of the information of trustable environments concerned by the pool of trustable environments;
determining (S312) the weight of each element in accordance with the significance of the element of the information of trustable environments to the determination of a trustable environment;
calculating (S313) a weighted value of the recorded information of the operation environment in accordance with the elements; and
when the weighted value is larger than a pre-set value, writing (S314) the information of the operation environment into the pool of trustable environments.

5. The method of claim 1, wherein after the updated resource value of the exhaustible network resource reaches the first-grade resource value:
when the operation environment of the next service operation is an untrustable environment, limiting the operation of the next login service operation; and/or
when the operation environment of the next login service operation is a trustable environment, limiting the maximum failure times of the operation of the next login service operation as the difference between the second-grade resource value and the first-grade resource value of the resource value of the exhaustible network resource.

6. The method of claim 1, wherein limiting the resource value of the exhaustible network resource of the login service operation within the second-grade resource value includes:
when the updated resource value of the exhaustible network resource reaches the second-grade resource value, limiting any further login service operation.

7. The method of any one of claims 1 to 6, wherein the trustable environment includes:
a determined operation environment corresponding to an operation of an exhaustible network resource performed by a proper operator;
a corresponding operation environment during recovery of the second-grade resource value; or
a determined operation environment corresponding to a normal operation.

8. An apparatus for limiting access to a network based account, the apparatus comprising:
a type determining unit (U51) configured to determine (S11) a type of a current service operation environment, in which a login service operation is being performed, wherein the type of the current service operation environment is a trustable environment or an untrustable environment;
a first limiting unit (U52) configured to limit (S12) a resource value of the exhaustible network resource of the login service operation within a first-grade resource value when the type of the current service operation environment is an untrustable environment; and
a second limiting unit (U53) configured to limit (S13) the resource value of the exhaustible network resource of the login service operation within a second-grade resource value when the type of the current service operation environment is a trustable environment, the second-grade resource value being larger than the first-grade resource value,
wherein, the apparatus is further configured to, when the login service operation fails, update the resource value of the exhaustible network resource is updated and when the updated resource value of the exhaustible network resource reaches the first-grade resource value and the current service operation environment is untrustable, the apparatus is further configured to limit further operation of the login service operations from within the untrustable environment;
and when the exhaustible network resource has been used up as indicated by the updated resource value reaching the second grade resource value, and the current service operation environment is trustable, the device is configured to limit any further login service operations, and wherein the exhaustible network resource is incorrect password attempts; and
wherein the login service operation is a service capable of achieving access to an account provided by a network service provider.

9. The apparatus of claim 8, further comprising
a pool of trustable environments (U54) configured to store information of trustable environments,
wherein the type determining unit includes:
a determining sub-unit (U511) configured to:
determine the current service operation environment as a trustable environment when the information of the current service operation environment matches with the information of trustable environments in the pool of trustable environments; or
determine the current service operation environment is an untrustable environment when the information of the current service operation environment does not match with the information of trustable environments in the pool of trustable environments.

10. The apparatus of claim 8, wherein the first limiting unit (U52) includes:
an updating sub-unit (U521) configured to update the resource value of the exhaustible network resource when an operation of the login service operation fails; and
the limiting sub-unit (U522) configured to limit any further login service operations when the updated resource value of the exhaustible network resource reaches the first-grade resource.

## Patentansprüche

1. Verfahren zum Begrenzen des Zugriffs auf ein netzwerkbasiertes Konto, wobei das Verfahren Folgendes umfasst:
Bestimmen (S11) eines Typs einer aktuellen Dienstbetriebsumgebung, in der ein Anmeldedienstbetrieb ausgeführt wird, wobei der Typ der aktuellen Dienstbetriebsumgebung eine vertrauenswürdige Umgebung oder eine nicht vertrauenswürdige Umgebung ist,
wenn der Typ der aktuellen Dienstbetriebsumgebung eine nicht vertrauenswürdige Umgebung ist:
Begrenzen (S12) eines Ressourcenwerts einer erschöpfbaren Netzwerkressource des Anmeldedienstbetriebs innerhalb eines Ressourcenwerts der ersten Klasse,
Aktualisieren des Ressourcenwerts als Reaktion auf einen Anmeldefehler und
wenn der aktualisierte Ressourcenwert der erschöpfbaren Netzwerkressource den Ressourcenwert der ersten Klasse erreicht, Begrenzen aller weiteren Anmeldedienstbetriebe aus der nicht vertrauenswürdigen Umgebung heraus,
andernfalls:
Begrenzen (S13) des Ressourcenwerts der erschöpfbaren Netzwerkressource des Anmeldedienstbetriebs innerhalb eines Ressourcenwerts der zweiten Klasse, wobei der Ressourcenwert der zweiten Klasse größer als der Ressourcenwert der ersten Klasse ist;
Aktualisieren des Ressourcenwerts als Reaktion auf einen Anmeldefehler; und
wenn die erschöpfbare Netzwerkressource aufgebraucht ist, wie durch den aktualisierten Ressourcenwert angegeben, der den Ressourcenwert der zweiten Klasse erreicht, und die aktuelle Dienstbetriebsumgebung vertrauenswürdig ist, Begrenzen aller weiteren Anmeldedienstbetriebe, wobei die erschöpfbare Netzwerkressource falschen Passwortversuchen entspricht und wobei der Anmeldedienstbetrieb ein Anmeldedienst ist, mit dem auf ein von einem Netzwerkdienstanbieter bereitgestelltes Konto zugegriffen werden kann.

2. Verfahren nach Anspruch 1, wobei das Bestimmen des Typs der aktuellen Dienstbetriebsumgebung Folgendes einschließt:
Einrichten eines Pools von vertrauenswürdigen Umgebungen mit Informationen zu vertrauenswürdigen Umgebungen; und
wenn die Informationen der aktuellen Dienstbetriebsumgebung mit den Informationen von vertrauenswürdigen Umgebungen im Pool von vertrauenswürdigen Umgebungen übereinstimmen, Bestimmen der aktuellen Dienstbetriebsumgebung als eine vertrauenswürdige Umgebung; oder
wenn die Informationen der aktuellen Dienstbetriebsumgebung nicht mit den Informationen von vertrauenswürdigen Umgebungen im Pool von vertrauenswürdigen Umgebungen übereinstimmen, Bestimmen, dass es sich bei der aktuellen Dienstbetriebsumgebung um eine nicht vertrauenswürdige Umgebung handelt.

3. Verfahren nach Anspruch 2, wobei das Einrichten des Pools von vertrauenswürdigen Umgebungen, der Informationen von vertrauenswürdigen Umgebungen enthält, Folgendes einschließt:
Aufzeichnen (S211) von Informationen zu Dienstbetriebsumgebungen und Schreiben der Informationen von Dienstbetriebsumgebungen in den Pool von vertrauenswürdigen Umgebungen; und
wenn der Pool von vertrauenswürdigen Umgebungen Informationen einer bestimmten Dienstbetriebsumgebung, die einem Betrieb einer erschöpfbaren Netzwerkressource entspricht, der von einem nicht ordnungsgemäßen Betreiber ausgeführt wird, oder Informationen einer bestimmten Dienstbetriebsumgebung enthält, die einem Diebstahlbetrieb entspricht, Entfernen (S213) der Informationen der Dienstbetriebsumgebung aus dem Pool von vertrauenswürdigen Umgebungen.

4. Verfahren nach Anspruch 2, wobei das Einrichten des Pools von vertrauenswürdigen Umgebungen, der Informationen von vertrauenswürdigen Umgebungen enthält, Folgendes einschließt:
Bestimmen (S311) von Elementen der Informationen von vertrauenswürdigen Umgebungen, die der Pool von vertrauenswürdigen Umgebungen betrifft;
Bestimmen (S312) des Gewichts jedes Elements gemäß der Bedeutung des Elements der Informationen von vertrauenswürdigen Umgebungen für die Bestimmung einer vertrauenswürdigen Umgebung;
Berechnen (S313) eines gewichteten Wertes der aufgezeichneten Informationen der Betriebsumgebung gemäß den Elementen; und
wenn der gewichtete Wert größer als ein voreingestellter Wert ist, Schreiben (S314) der Informationen der Betriebsumgebung in den Pool von vertrauenswürdigen Umgebungen.

5. Verfahren nach Anspruch 1, wobei, nachdem der aktualisierte Ressourcenwert der erschöpfbaren Netzwerkressource den Ressourcenwert der ersten Klasse erreicht hat:
wenn die Betriebsumgebung des nächsten Dienstbetriebs eine nicht vertrauenswürdige Umgebung ist, Begrenzen des Betriebs des nächsten Anmeldedienstbetriebs; und/oder
wenn die Betriebsumgebung des nächsten Anmeldedienstbetriebs eine vertrauenswürdige Umgebung ist, Begrenzen der maximalen Ausfallzeiten des Betriebs des nächsten Anmeldedienstbetriebs als die Differenz zwischen dem Ressourcenwert der zweiten Klasse und dem Ressourcenwert der ersten Klasse des Ressourcenwerts der erschöpfbaren Netzwerkressource.

6. Verfahren nach Anspruch 1, wobei das Begrenzen des Ressourcenwerts der erschöpfbaren Netzwerkressource des Anmeldedienstbetriebs innerhalb des Ressourcenwerts der zweiten Klasse Folgendes einschließt:
wenn der aktualisierte Ressourcenwert der erschöpfbaren Netzwerkressource den Ressourcenwert der zweiten Klasse erreicht, Begrenzen jedes weiteren Anmeldedienstbetriebs.

7. Verfahren nach einem der Ansprüche 1 bis 6, wobei die vertrauenswürdige Umgebung Folgendes einschließt:
eine bestimmte Betriebsumgebung, die einem Betrieb einer erschöpfbaren Netzwerkressource entspricht, der von einem ordnungsgemäßen Betreiber ausgeführt wird;
eine entsprechende Betriebsumgebung während der Wiederherstellung des Ressourcenwerts der zweiten Klasse; oder
eine bestimmte Betriebsumgebung, die einem normalen Betrieb entspricht.

8. Vorrichtung zum Begrenzen des Zugriffs auf ein netzwerkbasiertes Konto, wobei die Vorrichtung Folgendes umfasst:
eine Typbestimmungseinheit (U51), die konfiguriert ist, um einen Typ einer aktuellen Dienstbetriebsumgebung zu bestimmen (S11), in der ein Anmeldedienstbetrieb ausgeführt wird, wobei der Typ der aktuellen Dienstbetriebsumgebung eine vertrauenswürdige Umgebung oder eine nicht vertrauenswürdige Umgebung ist;
eine erste Begrenzungseinheit (U52), die konfiguriert ist, um einen Ressourcenwert der erschöpfbaren Netzwerkressource des Anmeldedienstbetriebs innerhalb eines Ressourcenwerts der ersten Klasse zu begrenzen (S12), wenn der Typ der aktuellen Dienstbetriebsumgebung eine nicht vertrauenswürdige Umgebung ist; und
eine zweite Begrenzungseinheit (U53), die konfiguriert ist, um den Ressourcenwert der erschöpfbaren Netzwerkressource des Anmeldedienstbetriebs innerhalb eines Ressourcenwerts der zweiten Klasse zu begrenzen (S13), wenn der Typ der aktuellen Dienstbetriebsumgebung eine vertrauenswürdige Umgebung ist, wobei der Ressourcenwert der zweiten Klasse größer ist als der Ressourcenwert der ersten Klasse,
wobei die Vorrichtung ferner so konfiguriert ist, dass sie, wenn der Anmeldedienstbetrieb fehlschlägt, den Ressourcenwert der erschöpfbaren Netzwerkressource aktualisiert und wenn der aktualisierte Ressourcenwert der erschöpfbaren Netzwerkressource den Ressourcenwert der ersten Klasse erreicht und die aktuelle Dienstbetriebsumgebung nicht vertrauenswürdig ist, die Vorrichtung ferner so konfiguriert, dass sie den weiteren Betrieb der Anmeldedienstbetriebe aus der nicht vertrauenswürdigen Umgebung heraus begrenzt;
und wenn die erschöpfbare Netzwerkressource aufgebraucht ist, wie durch den aktualisierten Ressourcenwert angegeben, der den Ressourcenwert der zweiten Klasse erreicht, und die aktuelle Dienstbetriebsumgebung vertrauenswürdig ist, die Vorrichtung so konfiguriert ist, dass weitere Anmeldedienstbetriebe begrenzt werden und wobei die erschöpfbare Netzwerkressource falschen Passwortversuchen entspricht; und
wobei der Anmeldedienstbetrieb ein Dienst ist, der in der Lage ist, einen Zugriff auf ein Konto zu erhalten, das von einem Netzwerkdienstanbieter bereitgestellt wird.

9. Vorrichtung nach Anspruch 8, ferner umfassend
einen Pool von vertrauenswürdigen Umgebungen (U54), konfiguriert zum Speichern von Informationen von vertrauenswürdigen Umgebungen,
wobei die Typbestimmungseinheit Folgendes einschließt:
eine Bestimmungsuntereinheit (U511), die zu Folgendem konfiguriert ist:
Bestimmen der aktuellen Dienstbetriebsumgebung als eine vertrauenswürdige Umgebung, wenn die Informationen der aktuellen Dienstbetriebsumgebung mit den Informationen von vertrauenswürdigen Umgebungen im Pool von vertrauenswürdigen Umgebungen übereinstimmen; oder
Bestimmen, dass die aktuelle Dienstbetriebsumgebung eine nicht vertrauenswürdige Umgebung ist, wenn die Informationen der aktuellen Dienstbetriebsumgebung nicht mit den Informationen von vertrauenswürdigen Umgebungen im Pool von vertrauenswürdigen Umgebungen übereinstimmen.

10. Vorrichtung nach Anspruch 8, wobei die erste Begrenzungseinheit (U52) Folgendes einschließt:
eine Aktualisierungsuntereinheit (U521), die konfiguriert ist, um den Ressourcenwert der erschöpfbaren Netzwerkressource zu aktualisieren, wenn ein Betrieb des Anmeldedienstbetriebs fehlschlägt; und
die Begrenzungsuntereinheit (U522), die konfiguriert ist, um weitere Anmeldedienstbetriebe zu begrenzen, wenn der aktualisierte Ressourcenwert der erschöpfbaren Netzwerkressource die Ressource der ersten Klasse erreicht.

## Revendications

1. Procédé permettant de limiter l'accès à un compte basé sur un réseau, le procédé comprenant :
la détermination (S11) d'une catégorie d'un environnement de fonctionnement de service actuel, dans lequel un fonctionnement de service de connexion étant en cours de réalisation, ladite catégorie de l'environnement de fonctionnement de service actuel étant un environnement sécurisé ou un environnement non sécurisé, si la catégorie de l'environnement de fonctionnement de service actuel est un environnement non sécurisé :
la limitation (S12) d'une valeur de ressource d'une ressource drainant le réseau du fonctionnement de service de connexion dans les limites d'une valeur de ressource de premier grade, la mise à jour de la valeur de ressource en réponse à un échec de connexion et lorsque la valeur de ressource mise à jour de la ressource drainant le réseau atteint la première valeur de ressource de premier grade, la limitation de tout fonctionnement de service de connexion supplémentaire à partir de l'environnement non sécurisé sinon :
la limitation (S13) de la valeur de ressource de la ressource drainant le réseau du fonctionnement de service de connexion dans le limites d'une valeur de ressource de second grade, la valeur de ressource de second grade étant supérieure à la valeur de ressource de premier grade ;
la mise à jour de la valeur de ressource en réponse à un échec de connexion ; et
lorsque la ressource drainant le réseau a été utilisée comme indiqué par la valeur de ressource mise à jour atteignant la valeur de ressource de second grade et que l'environnement de fonctionnement de service actuel est sécurisé, la limitation de toute fonctionnement de service de connexion supplémentaire, ladite ressource drainant le réseau étant des tentatives de mot de passe incorrectes et ledit fonctionnement de service de connexion étant un service de connexion capable d'obtenir l'accès à un compte fourni par un fournisseur de services réseau.

2. Procédé selon la revendication 1, ladite détermination de la catégorie de l'environnement de fonctionnement de service actuel comprenant :
l'établissement d'un groupement d'environnements sécurisés contenant des informations d'environnements sécurisés ; et
lorsque les informations de l'environnement de fonctionnement de service actuel correspondent aux informations d'environnements sécurisés dans le groupement d'environnements sécurisés, la détermination de l'environnement de fonctionnement de service actuel en tant qu'environnement sécurisé ; ou
lorsque les informations de l'environnement de fonctionnement de service actuel ne correspondent pas aux informations d'environnements sécurisés dans le groupement d'environnements sécurisés, la détermination que l'environnement de fonctionnement de service actuel est un environnement non sécurisé.

3. Procédé selon la revendication 2, ledit établissement du groupement d'environnements sécurisés contenant des informations d'environnements sécurisés comprenant :
l'enregistrement (S211) des informations d'environnements de fonctionnement de service, et l'écriture des informations d'environnements de fonctionnement de service dans le groupement d'environnements sécurisés ; et
lorsque le groupement d'environnements sécurisés contient des informations d'un environnement de fonctionnement de service déterminé correspondant à un fonctionnement d'une ressource drainant le réseau effectuée par un opérateur inapproprié, ou des informations d'un environnement de fonctionnement de service déterminé correspondant à une opération de vol, de suppression (S213) des informations de l'environnement de fonctionnement de service à partir du groupement d'environnements sécurisés.

4. Procédé selon la revendication 2, ledit établissement du groupement d'environnements sécurisés contenant des informations d'environnements sécurisés comprenant :
la détermination (S311) des éléments des informations d'environnements sécurisés concernés par le groupement d'environnements sécurisés ;
la détermination (S312) du poids de chaque élément conformément à l'importance de l'élément des informations d'environnements sécurisés pour la détermination d'un environnement sécurisé ;
le calcul (S313) d'une valeur pondérée des informations enregistrées de l'environnement de fonctionnement conformément aux éléments ; et
lorsque la valeur pondérée est supérieure à une valeur prédéfinie, l'écriture (S314) des informations de l'environnement de fonctionnement dans le groupement d'environnements sécurisés.

5. Procédé selon la revendication 1, après que la valeur de ressource mise à jour de la ressource drainant le réseau atteint la valeur de ressource de premier grade :
lorsque l'environnement de fonctionnement du fonctionnement de service suivant est un environnement non sécurisé, la limitation du fonctionnement du fonctionnement de service de connexion suivant ; et/ou
lorsque l'environnement de fonctionnement du fonctionnement de service de connexion suivant est un environnement sécurisé, la limitation du nombre de fois maximal d'échec du fonctionnement du fonctionnement de service de connexion suivant sous la forme de la différence entre la valeur de ressource de second grade et la valeur de ressource de premier grade de la valeur de ressource de la ressource drainant le réseau.

6. Procédé selon la revendication 1, la limitation de la valeur de ressource de la ressource drainant le réseau du fonctionnement de service de connexion dans la valeur de ressource de second grade comprenant :
lorsque la valeur de ressource mise à jour de la ressource drainant le réseau atteint la valeur de ressource de second grade, la limitation de tout fonctionnement de service de connexion supplémentaire.

7. Procédé selon l'une quelconque des revendications 1 à 6, ledit environnement sécurisé comprenant :
un environnement de fonctionnement déterminé correspondant à un fonctionnement d'une ressource drainant le réseau effectuée par un opérateur approprié ;
un environnement de fonctionnement correspondant durant la récupération de la valeur de ressource de second grade ; ou
un environnement de fonctionnement déterminé correspondant à un fonctionnement normal.

8. Appareil destiné à limiter l'accès à un compte basé sur un réseau, l'appareil comprenant :
une unité de détermination de catégorie (U51) configurée pour déterminer (S11) une catégorie d'un environnement de fonctionnement de service actuel, dans lequel un fonctionnement de service de connexion est en cours de réalisation, ladite catégorie de l'environnement de fonctionnement de service actuel étant un environnement sécurisé ou un environnement non sécurisé ;
une première unité de limitation (U52) configurée pour limiter (S12) une valeur de ressource de la ressource drainant le réseau du fonctionnement de service de connexion dans les limites d'une valeur de ressource de premier grade lorsque la catégorie de l'environnement de fonctionnement de service actuel est un environnement non sécurisé ; et
une seconde unité de limitation (U53) configurée pour limiter (S 13) la valeur de ressource de la ressource drainant le réseau du fonctionnement de service de connexion dans les limites d'une valeur de ressource de second grade lorsque la catégorie de l'environnement de fonctionnement de service actuel est un environnement sécurisé, la valeur de ressource de second grade étant supérieure à la valeur de ressource de premier grade, ledit appareil étant en outre configuré pour, lorsque le fonctionnement de service de connexion échoue, mettre à jour la valeur de ressource de la ressource drainant le réseau et lorsque la valeur de ressource mise à jour de la ressource drainant le réseau atteint la valeur de ressource de premier grade et que l'environnement de fonctionnement de service actuel n'est pas sécurisé, ledit appareil étant en outre configuré pour limiter un fonctionnement supplémentaire des fonctionnements de service de connexion à partir de l'environnement non sécurisé ; et lorsque la ressource drainant le réseau a été utilisée comme indiqué par la valeur de ressource mise à jour atteignant la valeur de ressource de second grade, et que l'environnement de fonctionnement de service actuel est sécurisé, ledit dispositif étant configuré pour limiter tout fonctionnement de service de connexion supplémentaire, et ladite ressource drainant le réseau étant des tentatives de mot de passe incorrectes ; et
ledit fonctionnement de service de connexion étant un service capable d'obtenir l'accès à un compte fourni par un fournisseur de services réseau.

9. Appareil selon la revendication 8, comprenant en outre un groupement d'environnements sécurisés (U54) configuré pour stocker des informations d'environnements sécurisés, ladite unité de détermination de catégorie comprenant :
une sous-unité de détermination (U511) configurée pour : déterminer l'environnement de fonctionnement de service actuel en tant qu'environnement sécurisé lorsque les informations de l'environnement de fonctionnement de service actuel correspondent aux informations d'environnements sécurisés dans le groupement d'environnements sécurisés ; ou
déterminer que l'environnement de fonctionnement de service actuel est un environnement non sécurisé lorsque les informations de l'environnement d'exploitation de service actuel ne correspondent pas aux informations d'environnements sécurisés dans le groupement d'environnements sécurisés.

10. Appareil selon la revendication 8, ladite première unité de limitation (U52) comprenant : une sous-unité de mise à jour (U521) configurée pour mettre à jour la valeur de ressource de la ressource drainant le réseau lorsqu'un fonctionnement du fonctionnement de service de connexion échoue ; et la sous-unité de limitation (U522) configurée pour limiter tout fonctionnement de service de connexion supplémentaire lorsque la valeur de ressource mise à jour de la ressource drainant le réseau atteint la ressource de premier grade.
